Europäisches Patentamt

European Patent Office

Office européen des brevets

(11) Publication number: **0 268 012**
**A1**

## (12) EUROPEAN PATENT APPLICATION

(21) Application number: **87107838.2**

(22) Date of filing: **29.05.87**

(51) Int. Cl.4: **A21D 8/04 , A21D 6/00**

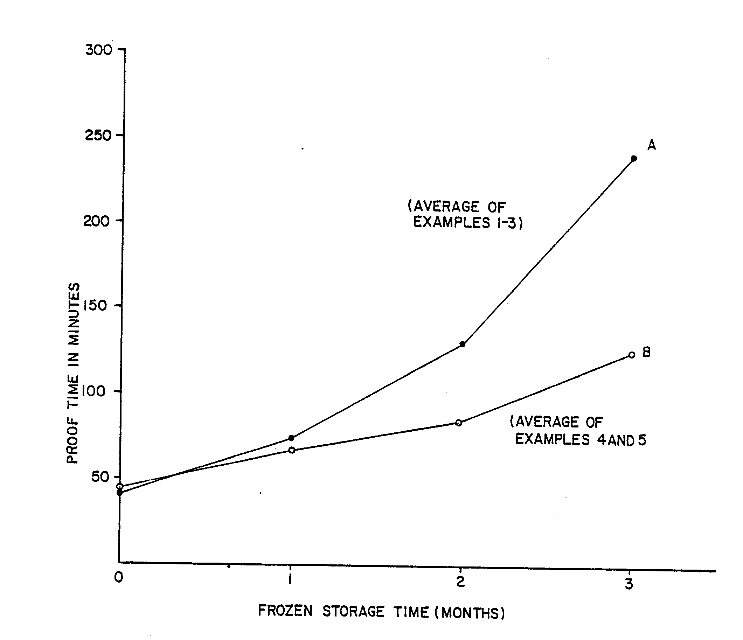

A request for addition of drawing 1/1 (diagram) has been filed pursuant to Rule 88 EPC. A decision on the request will be taken during the proceedings before the Examining Division (Guidelines for Examination in the EPO, A-V, 2.2).

(30) Priority: **20.11.86 US 933082**

(43) Date of publication of application:
**25.05.88 Bulletin 88/21**

(84) Designated Contracting States:
**BE DE FR GB IT NL**

(71) Applicant: **Universal Foods Corporation**
**433 East Michigan Street**
**Milwaukee Wisconsin 53201(US)**

(72) Inventor: **Trivedi, Nayan B.**
**9485 N. Waverly Drive**
**Bayside Wisconsin 53217(US)**
Inventor: **Reed, Gerald**
**2618 E. Beverly Drive**
**Shorewood Wisconsin 53211(US)**

(74) Representative: **Klunker . Schmitt-Nilson .**
**Hirsch**
**Winzererstrasse 106**
**D-8000 München 40(DE)**

(54) **Frozen yeast dough products.**

(57) An improved shelf stable, frozen yeast leavened bakery goods dough composition is provided which incorporates into the dough mix the yeast Torulaspora delbrueckii NRRL Y-18137 (RS 1931). The frozen dough compositions show improved leavenability after storage in the frozen state for periods of two to three months.

EP 0 268 012 A1

# FROZEN YEAST DOUGH PRODUCTS

## BACKGROUND OF THE INVENTION

### Field of the Invention

This invention relates to frozen yeast dough bakery product compositions which retain high leavening ability after extended shelf life in the frozen state.

### Description of the Prior Art

The use of bakers yeast to leaven or raise a flour and water dough mix which is then baked to form bakery products is well known to the art.

More recently, various convenience forms of frozen dough compositions have been marketed in the retail trade. These frozen dough compositions include biscuit mixes which contain a chemical leavening agent which is activated by heat and gives rise to the characteristic cellular nature of baked goods. This class of chemically leavened frozen products may be exemplified by baking powder biscuits.

While chemical leavening is satisfactory for certain products such as biscuits and cakes, there are certain classes of baked goods which for consumer acceptability and by tradition are leavened or raised by the use of bakers yeast. These include bread, sweet rolls, raised donuts, croissants, coffee cakes, dinner rolls, hamburger rolls, bagels, pizzas and the like. This latter group of yeast leavened products have of course traditionally been made and baked in the home, and also sold by commercial establishments.

More recently frozen yeast leavened bakery dough products have been marketed in a form whereby a dough product containing yeast is mixed, divided, formed into loaves or the like in the plant without substantial leavening, and then frozen and sold through a marketing chain to retail consumers through stores and super-markets. These yeast containing, formed, frozen, bakery dough products are then thawed by the consumer, permitted to proof or rise to the final desired state and then baked in an oven to produce the final baked product such as a loaf of bread or a dinner roll. Of course, this marketing concept is attractive to the homemaker because it makes possible the serving of yeast leavened fresh baked bread, dinner rolls, croissants or the like with their traditional taste, aroma and texture, without the necessity of going through the customary procedures of mixing dough with yeast followed by several stages of raising, dividing, forming and the final proofing, or raising of the formed product prior to baking to a final product. See Reed et al., Yeast Technology, AVI Pub Co. Westport, CT (1973) pp. 152-155.

The characteristic yeast fermentation flavor of yeast leavened bakery goods makes for their consumer acceptability from the point of view of aroma and taste. The use of chemical leavening agents as in the leavening of what are traditionally yeast leavened bakery products, imparts a distinct chemical taste to the product and is therefore undesirable from the consumer point of view.

It is known that bakers yeast is a living organism of live yeast cells which grows and produces carbon dioxide gas in the dough medium to produce in the dough the cellular leavened or porous structure characteristic of yeast raised bread products. Freezing of yeast that is incorporated initially into dough compositions necessarily results in the death of some yeast cells and extended storage in the frozen state further reduces the viability of the yeast, i.e., the capacity to grow and produce carbon dioxide, is diminished as a function of time because of additional die off of yeast cells. Thus with extended storage in the frozen state the yeast contained in frozen dough compositions will have its viability, i.e., the population of yeast cells able to function normally in the leavening process, so reduced as to be unable to adequately leaven the dough prior to baking, or at least to do so within any reasonable time frame. As a practical matter in retail merchandising environments, frozen dough products containing yeast should desirably have shelf lives such that the dough products after thawing will, after frozen storage times of at least two and desirably after three or four months leaven adequately to produce a satisfactory yeast leavened baked bakery product.

In the ordinary course of retailing, a yeast containing frozen dough product would be manufactured, stored by the manufacturer pending shipment, frequently stored in distribution centers, maintained in retail store displays and after purchase often stored by the homemaker in the home freezer compartment for future use, a time sequence that often takes from 2 to 3 months. Because of the deterioration of the yeast dough compositions with time, these products are frequently sold and dated for use prior to a certain expiration date.

It has been found that ordinary commercial yeasts used in commercial baking operations do not retain their viability and do not exhibit good extended shelf life when used in frozen dough compositions stored for extended periods of time, exhibiting noticeable deterioration in the leavening function of the yeast after about a month and substantial and marked deterioration of leavening action after storage times of two months or more. It has been found that the ordinary commercial yeasts which function well in traditional leavening and baking formats, do not retain their viability when incorporated into frozen dough compositions which are stored for extended periods. It has also been found that yeasts with high osmotolerance do not by reason of that characteristic exhibit any particular benefit when used in frozen dough compositions.

Accordingly, it would be desirable to provide frozen yeast dough compositions suitable for extended storage which would retain a high level of their original leavening properties or capacity after thawing. Most desirable would be frozen yeast/dough compositions which would adequately leaven on thawing after storage times in the frozen state of at least 2 months and up to about three or four months and be able to produce on baking a satisfactory yeast leavened bakery product. A further object is to provide for frozen yeast dough compositions with high or extended frozen shelf storage stability that would be useful for a wide range of bakery products including for example sweet, regular and lean doughs.

The attainment of these objects may be seen in the following invention.


## SUMMARY OF THE INVENTION

The present invention relates to improved frozen, leavenable yeast bakery goods dough compositions which on subsequent thawing retain a high and improved level of yeast leavening capacity after previous storage in the frozen state for periods of at least two months and preferably up to about three months or more by the use of the bakers yeast Torulaspora delbrueckii , NRRL Y-18137.

The formulation of such frozen, yeast leavenable bakery dough products of this invention includes a wide spectrum of bakery goods, particularly frozen dough compositions which basically include flour, water and the yeast Torulaspora delbrueckii, NRRL Y-18137. The frozen dough compositions of the present invention in a narrower form may also include sugar in such amounts so as to result in lean doughs, regular doughs (such as bread) and sweet doughs which contain, respectively, sugar in increasing amounts up to about 25% based on the flour used in the dough mix. Other optional nutrient additives conventionally added to bakery doughs for texture taste and quality of the baked goods include salt, milk (usually non-fat dry milk [NFDM]), shortening and eggs (usually dried eggs) and yeast food.

Other minor additives are conventionally and may be here optionally added in small amounts are emulsifiers, oxidizing agents and dough conditioners.

A one broad form of the present invention relates to frozen, unleavened and unbaked yeast dough compositions comprising flour, water and the yeast Torulaspora delbrueckii, NRRL Y-18137, (also internally known as RS. 1931) which exhibit extended shelf stable leavening properties when stored in the frozen state for periods of at least two months and which on thawing are capable of leavening the dough product prior to baking.

The temperatures referring to the frozen state of the dough are below the freezing point of water (32° F or 0° C) most particularly at deep freeze or freezer temperatures of below about 0° F (0 to -6°F; -18C to -21° C). Usually the dough mix after formation is frozen to temperatures of from about -3 to -5° F (-19.4°C to -20° C).

The present invention also includes a method or process for preparing frozen yeast leavenable flour dough mix as having extended frozen shelf life stability for periods of 2 to 3 months or more which comprises admixing flour, water and the bakers yeast Torulaspora delbrueckii, NRRL Y-18137, dividing the dough, forming the dough into units of the desired bakery product shape, and freezing the formed dough mix units to temperatures below about 0°F or -18°C, or below.

Generally, the mixing process is preferably carried out under low temperatures, i.e., mix temperatures below about 75°F and for periods of time, i.e., less than about 2 hours, preferably less than one hour, so that substantially little or only minor leavening of the dough occurs prior to freezing.

## Description of the Drawing

The attached drawing is a graph comparing the time required to reach a predetermined proofing level of thawed frozen dough compositions previously stored in the frozen state from zero to three months wherein the dough compositions using prior art bakers yeast as the leavening agent (curve A) and dough compositions of the present invention, using the yeast Torulaspora delbrueckii, NRRL Y-18137. (RS-1931) as the leaving agent (curve B), are compared.

## DESCRIPTION OF THE PREFERRED EMBODIMENTS

For a more complete understanding of the present invention reference is made to the following detailed description and specific examples.

As indicated, the frozen dough compositions of the present invention are broadly flour, water and yeast compositions which include the bakers yeast Torulaspora delbrueckii, NRRL Y-18137.

The yeast Torulaspora delbrueckii is a strain referred to in German Patent Application No. DE 3230891 published on May 10, 1984. The yeast described by the inventors Windisch et al. is identified as the strain Wi3, of which was deposited in the Deutsche Sammlung von Mikroorganismen, 3400 Gottingen, Grisebachstrasse, 8 and given the collection deposit number DSM 2411.

This yeast is also internally designated by the inventors assignee as RS 1931 and so identified has been deposited on November 18, 1986 in the collection of the Northern Regional Research Laboratories at Peoria, Illinois and given the deposit number NRRL Y-18137.

Although only called bakers yeast in the Germany application, the yeast has been identified as a Torulaspora delbrueckii strain, using the most recent taxonomic classification. See The Yeasts, a Taxonomic Study, ed. Kreger Van Rij, Elsevier Science Publishers B.V. Amsterdam, 1980, p. 435. It has also been previously identified as Torulaspora rosei and Saccharomyces rosei .

The German application describes the yeasts as bakers yeasts which can be grown in standard nutrient solution. They are described as particularly useful in heavy doughs containing about 7% sugar and 14% fat and can reduce total raising time, as compared to standard yeasts. There is no teaching of the use of the yeast in frozen dough compositions.

Generally the frozen dough compositions of the present invention broadly include flour, water and yeast. The percentages of additives other than flour are expressed herein in terms of weight percent, based on the weight of the flour component of the dough mix.

For example, the basic yeast dough compositions useful for freezing contain flour (usually wheat flour) from 3 to 12% yeast, and water in amounts sufficient to make a dough of the desired consistency, usually from 40 to 75%. In a preferred composition the dough contains flour, from 4 to 10% yeast and from 45 to 70% water, and as indicated above all said percentages being based on flour used in the mix.

Other nutrient additives may also be optionally used in said compositions depending on the end use of the baked dough product. These include sugar used in amounts of from 1 to 25%; shortening such as butter, oil, vegetable shortening in amounts of from 1 to 35%, preferably 1-25%; non-fat dry milk (NFDM), 0-8%; and dried eggs, 0-7.5%.

Other conventional, non-nutrient, dough additives may also be used such as about 0 to 3% salt; emulsifiers in amounts of 0 to 1%; oxidizing agents (K bromate), 0-100 ppm; conditioners (ascorbic acid), 0-100 ppm; yeast foods (commercial yeast food additives such as "Starproof" which condition the dough and supplement the nutrients found in flour); 0 to 2.0%, preferably 0 to 1.75%; EOM (ethoxylated di-and monoglycerides) may be used in amounts of from 0 to 1%; and M0/Dl (mono and diglycerides) may be used in amounts of 0 to 1%, preferably from 0 to .75%.

The following table includes general examples of typical sweet and regular dough compositions that are useful in the practice of the present invention.

## Table

|  | Sweet | Regular |
|---|---|---|
| Flour | 100 grams | 100 grams |
| Salt | 1-3% | 1-3% |
| Shortening | 10-35% | 1-6% |
| Sugar | 8-25% | 1-8% |
| Water | 45-61% | 45-70% |
| Yeast | 6-12% | 4-10% |
| Yeast Food(1) | 0-.75% | 0-.75% |
| NFDM | 3-8% | 0-5% |
| Dried Eggs. | 2.5-7.5% | 0-3.5% |
| SSL (2) | 0-0.5% | 0-.5% |
| EOM (3) | 0-0.5% | 0-.5% |
| MD/DI (4) | 0-.75% | 0-.75% |
| K Bromate | 0 | 0-40 ppm |
| Ascorbic acid | 0 | 0-100 ppm |

* The weight of the other ingredients are expressed in terms of percent by weight based on flour. Bromate and ascorbic acid are expressed in terms of ppm. on flour used.
(1) Starproof brand yeast food manufactured by Universal Foods, Milwaukee, Wi.
(2) SSL = stearoyl-2-lactylate
(3) EOM = ethoxyated di-and mono-glycerides
(4) MO/DI = mono-and di-glycerides

The following examples illustrate the manufacture of frozen dough compositions and the results of comparative tests of frozen dough compositions of the present invention using the Torulaspora delbrueckii Y-18137 as the leavening yeast and a commercial compressed baker's yeast.

## Manufacture of Press Cake Yeast

The yeast Torulaspora delbrueckii was prepared by standard techniques by propagation on molasses as the nutrient food carbon source. A pure culture of the yeast strain Torulaspora delbrueckii NRRL Y-18137 (RS 1931) was propagated (15 hours) on a molasses substrate in a series of laboratory fermenters, the yeast recovered, and reduced in moisture to the cream stage (18-21% solids). Yeast cream was then reduced to a moisture content to about 66% and formed into a compressed or press cake form. See Reed and Peppler, Yeast Technology, AVI Pub. Co., Westport, Connecticut (1973), generally and pp. 83-88, and Reed, G, Editor, Prescott & Dunns Industrial Microbiology, 4th ed. AVI Pub. Co., Westport, CT, 1982, p. 598-99.

## Dough Formulations

The press cake yeast <u>Torulaspora delbrueckii</u> NRRL Y-18137, (RS-1931) and commercial compressed yeast (Universal Foods Corp., Milwaukee, Wisc., Fermentation Div.) were incorporated into dough mixes having the following general formula based on 100 grams of flour used.

| Standard Dough Formula | Flour | 100.0 (grams) |
|---|---|---|
| Water (35°F) | 61.0% | |
| Yeast | 5.6% | |
| Sugar | 4.0% | |
| NFDM | 4.0% | |
| Shortening | 3.0% | |
| Salt | 2.0% | |
| SSL* | .27% | |
| Starproof** (yeast food) | 1.55% | |
| K bromate | 48 ppm | |
| Ascorbic acid | 48 ppm | |

\* Sodium stearoyl -2 - lactylate emulsifier

\*\* A commercial dough conditioner and yeast food sold by Universal Foods Corp. (Milwaukee, Wis)

## Dough Manufacture and Freezing Procedure

The following procedure was used to make standard loaves for comparative testing.

1. Put dry ingredients (except potassium bromate and ascorbic acid) and yeast into mixing bowl.

2. Mix potassium bromate and ascorbic acid in water until they dissolve. Pour into mixing bowl of standard mixer.

3. Mix 1 minute on low, 1 minute on medium, and 11-13 minutes on high speed until development.

4. Take temperature of dough and scale at 525 grams. Round and let sit for 10 minutes covered.

5. Mold dough into loaves and put on sheet pan for freezing. (-6°F).

6. After 3-4 hours in freezer chamber, put 3 loaves into a double lined plastic bag for storage at zero time frozen, 1 month, 2 months, and 3 months.

7. Two loaves are thawed in a refrigerator overnight, proof time measured and baked.

The following results were obtained in tests of frozen dough stability, in terms of proof time required to raise or proof the thawed loaf to a predetermined volume level when the loaf (525 grams) was placed in a standard proofing bread pan in the proofing oven (95°F, 100% Rel. Humidity).

The end point of the test is the time required for the loaf to rise one inch above the top of the standard tapered bread pan, top dimensions 4.5 $\times$ 10 inches, bottom dimensions 3 1/2 $\times$ 8 inches and a total height of 2 3/4 inches.

Examples 1, 2 and 3 following, were dough mixes using the above noted Standard Dough Formula using a standard commercial bakers press cake or compressed yeast (CY) (<u>Saccharomyces cerevisiae</u>; Universal Foods Corp.), and Examples 4 and 5 were mixes using the compressed yeast <u>Torulaspora delbrueckii</u>, NRRL Y-18137, (RS 1931) in the same amount indicated in the Formula. Examples 1 and 2 used commercial yeast plant runs, and Example 3 used the same commercial baker's yeast as Examples 1 and 2 made in a laboratory fermenter. Examples 4 and 5 used the compressed yeast NRRL Y-18137 made in laboratory fermenters as described above. Zero time means the unraised dough composition loaf form was frozen with the other test loaves and essentially immediately thawed and tested for proof time. The following results were obtained:

## Frozen Dough Tests

### Proof Time (Min.)

| months: | 0 | 1 | 2 | 3 |
|---|---|---|---|---|
| Ex. 1* | 34 | 80 | 124 | 259 |
| Ex. 2* | 58 | 78 | 157 | 242 |
| Ex. 3* | 37 | 63 | 109 | 222 |
| Ex. 4** | 47 | 54 | 75 | 113 |
| Ex. 5** | 42 | 77 | 90 | 149 |
| Average of Ex's 1-3. | 43 | 74 | 130 | 241 |
| Average of Ex's 4 & 5 | 45 | 66 | 83 | 131 |
| Advantage of Ex. 4,5 | -5 | +8% | +36% | +46% |

---

\* Commercial bakers compressed yeast (CY) (Universal Foods; Bakers Yeast _Saccharomyces cerevisiae_)

\*\* _Torulaspora delbrueckii_ NRRL Y-18137 (RS. 1931).

From the above experiments it may be seen that the frozen yeast dough compositions of the present invention show greatly improved stability in frozen shelf life. Thus while after one month the frozen dough compositions of the present invention show only modest improvement over doughs using commercial bakers yeasts, the improvement in stability becomes more pronounced after 2 and 3 months of frozen storage. Thus the frozen dough compositions of the invention (Ex. 4 and 5) show 36 to 46% less proof time is required to reach the predetermined proof level. In addition, in comparing the averaged data, the yeast dough compositions of the present invention show that the loaf proof time after two months is substantially the same as after one month when using standard bakers yeast; and at three months, the average results of loaves made using the dough compositions of this invention are essentially the same as the two month level for dough compositions using standard bakers yeast, representing generally gains of one month storage stability over conventional yeasts, an obvious commercial advantage.

These results are also set forth in the attached drawing wherein the average proof times at zero, 1, 2 and 3 months are graphically shown for the data in Example 1-5.

The lower curve (B) representing the average of results for Examples 4 and 5 of the invention shows a relatively flat curve, indicating by its gradual rise that freezing deterioration of the viability of the yeast is relatively slow and at an acceptable rate. On the other hand the average of Examples 1-3 (Curve A), using commercial bakers yeast, indicates that after one month frozen storage the deterioration of yeast viability and hence stability in the mix is very rapid, almost increasing at a geometric rate.

To state it another way, the frozen dough products using commercial yeasts are deteriorating at a high rate after one month compared to the frozen dough products of the present invention using _Torulaspora delbrueckii_ NRRL Y-18137. Thus using the present invention as a comparison base or standard, the frozen commercial yeast dough compositions are 12% worse after one month frozen storage and become 69% worse at 2 months and 84% worse after three months storage in the frozen state.

The following examples illustrate additional exemplary general formulas for frozen dough compositions of the present invention for sweet, regular and lean doughs which employ _Torulaspora delbrueckii_ NRRL Y-18137 as the leavening yeast.

|              | Ex. 6 (Sweet) | Ex. 7 (Regular) | Ex. 8 (Lean) |
|--------------|---------------|-----------------|--------------|
| Flour*       | 100 grams     | 100 grams       | 100 grams    |
| Salt         | 1.5%*         | 2.0%*           | 2.0%         |
| Shortening   | 18%           | 6.0%            | 3.0%         |
| Sugar        | 16%           | 6%              | 4.0%         |
| Water        | 50%           | 58%             | 60.%         |
| Yeast (CY)** | 10%           | 6.0%            | 5.0%         |
| Yeast Food   | 0.25%         | 0.25%           | 0.25%        |
| NFDM         | 5%            | 5%              | 4%           |
| Dried Eggs   | 4%            | ____            | ____         |
| SSL          | 0.5%          | 0.4%            | 0.5%         |
| EOM          | 0.5%          | 0.5%            | 0.5%         |
| MO/DI        | 0.75%         | 0.75%           | 0.75%        |
| K Bromate    | 40 ppm        | 40 ppm          | 40 ppm       |
| Ascorbic acid| 100 ppm       | 100 ppm         | 100 ppm      |

* The percentages of ingredients except for flour (100 grams) are expressed as weight percent based on of flour. Bromate and ascorbic acid are expressed as ppm/ of flour used.

** _Torulaspora delbrueckii_, NRRL Y-18137.

The foregoing frozen dough compositions are specifically adapted for commercial use, especially retail consumer use. They have shelf lives in the frozen state which results in satisfactory leavening performance, after storage at freezing temperatures (i.e. below 0°F) for periods of at least 3 months or more, enabling the housewife or homemaker to produce a satisfactory "home baked" bakery product by the simple expedient of thawing, proofing and baking. These frozen dough compositions, however, may also be used in commercial contexts, including institutional commissaries and dough products mixed and frozen in a central plant and sent to regional company "baking" establishments for baking and distribution for retail sale of the bakery goods. The formed frozen dough compositions of the invention may also be prepared in a central plant and shipped to distant local retail bakeries for thawing, proofing and baking into finished goods. The baked bakery products made from the frozen dough compositions may be further treated before of after baking in a conventional manner by glazing, frosting, adding toppings, etc.

**Claims**

1. An improved shelf stable, yeast leavenable, frozen dough composition comprising flour, water and as a leavening agent the yeast _Torulaspora delbrueckii_ NRRL Y-18137.

2. A frozen, shelf stable, yeast leavenable frozen dough bakery goods composition having an improved frozen shelf life comprising flour, sufficient water to make a workable dough mix and from 1 to 12% of the yeast _Torulaspora delbrueckii_ NRRL Y-18137, said percentage being based on the weight of flour used in said compositions.

3. A frozen, shelf stable, yeast leavenable frozen dough composition having an improved frozen shelf life which comprises flour, from 40 to 75% water and from 1 to 12% of the yeast _Torulaspora delbrueckii_ NRRL Y-18137, said percentages being based on the weight of flour used in said composition.

4. The frozen dough composition according to Claim 3 which additionally contains from 1 to 25% sugar, based on flour.

5. The frozen dough composition according to Claim 3 wherein the yeast used is from 4 to 8% by weight, based on flour.

6. The frozen dough composition of Claim 3 which additionally contains from about 1 to 35% by weight of shortening, based on flour.

7. The frozen dough composition of Claim 3 which additionally contains from about 0 to 4% of non-fat dry milk, based on flour.

8. The frozen dough composition of Claim 3 which additionally contains from about 0 to 7.5% of dried eggs, based on flour.

9. A frozen, shelf stable yeast leavening bakery dough composition having good frozen shelf life stability and the capacity to be yeast leavened after thawing and baked into a finished bakery product, which frozen composition comprises a frozen admixture of flour, from about 45 to 70% water, from about 4 to 10% of the yeast Torulaspora delbrueckii, NRRL Y-18137, from about 1 to 25% sugar, from about 1 to 25% shortening, from about 0 to 3% salt, said percentages being by weight of flour used in said compositions.

10. A frozen, shelf stable, dough composition according to Claim 9 which also contains as additional nutrients nonfat dried milk, and dried eggs.

11. A frozen shelf stable dough composition according to Claim 10 which additionally contains emulsifiers, flour oxidizing agents, and preservatives and dough conditioners.

12. The dough composition according to Claim 9 which is frozen at temperatures below about 0°F.

13. A method of forming a yeast leavenable shelf stable frozen bakery dough composition characterized by exhibiting improved leavenability on thawing from the frozen state after a period of at least two months which comprises forming a dough by admixing flour with from about 40 to 70% water, from about 1 to 12% of the yeast Torulaspora delbrueckii , NRRL Y-18137, from about 1 to 25% sugar, from about 0 to 3% salt and from about 1 to 35% shortening; forming said dough into pre-baked units for the desired bakery goods and freezing said formed dough unit solid at a temperature of zero degrees fahrenheit or below, said percentages being based on the weight of flour used in said compositions.

14. A method according to Claim 13 carried out under conditions of time and temperature whereby substantially minimal leavening takes place before the formed dough mixture is frozen.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | CHEMICAL ABSTRACTS, vol. 106, no. 19, 11th May 1987, abstract no. 155087q, Columbus, Ohio, US; & JP-A-61 96 983 (SANKYO CO., LTD) 15-05-1986 * Abstract * | 1-14 | A 21 D 8/04<br>A 21 D 6/00 |
| A | THE BAKERS DIGEST, vol. 42, no. 5, October 1968, pages 44-46,48-50; L. KLINE et al.: "Factors affecting the stability of frozen bread doughs" * Page 44, column 3; page 48, column 3 * | 2-14 | |
| X | JP-A-56 144 036 (SANKYO) * Page 185, column 1; page 186, column 2 * | 1-14 | |
| X | GB-A-2 139 473 (KYOWA NAKKO KOGYO K.K.) * Page 1, lines 18-29 * | 1-14 | |
| A | US-A-3 830 938 (E. MORIKAWA) * Claim 1 * | 1,4 | TECHNICAL FIELDS SEARCHED (Int. Cl.4)<br><br>A 21 D |

The present search report has been drawn up for all claims

| Place of search | Date of completion of the search | Examiner |
|---|---|---|
| THE HAGUE | 27-01-1988 | COUCKE A.O.M. |